# EUROPÄISCHE PATENTSCHRIFT

(11) **EP 3 314 029 B1**
(45) Veröffentlichungstag und Bekanntmachung des Hinweises auf die Patenterteilung: **21.08.2019**
(21) Anmeldenummer: 16731496.2
(22) Anmeldetag: 25.05.2016
(51) Int. Cl.: C22B 1/00

(54) **VERFAHREN UND VORRICHTUNG ZUR BEHANDLUNG VON METALLSTÜCKEN**
METHOD AND DEVICE FOR TREATING METAL PIECES
PROCÉDÉ ET DISPOSITIF DE TRAITEMENT DE PIÈCES DE MÉTAL

(30) Priorität: 25.06.2015 DE 102015211847; 06.10.2015 DE 102015116933
(43) Veröffentlichungstag der Anmeldung: 02.05.2018
(73) Patentinhaber: SMS group GmbH, 40237 Düsseldorf (DE)
(72) Erfinder: STASTNY, Raffael, 1070 Wien (AT); ÖSTERREICHER, Markus, 1050 Wien (AT); HASS, Steve, 50935 Köln (DE)
(74) Vertreter: Kross, Ulrich
(86) Internationale Anmeldenummer: PCT/DE2016/100239
(87) Internationale Veröffentlichungsnummer: WO 2016/206673

(56) Entgegenhaltungen:
- US-A- 4 501 073
- US-A- 5 106 467

## Beschreibung

Die vorliegende Erfindung betrifft ein Verfahren und eine Vorrichtung zum Beizen von beschichteten Metallschrottstücken, wobei die Metallschrottstücke mit einer Beizflüssigkeit in Kontakt gebracht werden.

In der Auto- und Bauindustrie ist mit Zink beschichteter Stahl ein wichtiges Ausgangsmaterial für eine Vielzahl von Endprodukten. Sowohl bei der Herstellung und Verarbeitung als auch bei Recyclingprozessen der Endprodukte fällt mit Zink beschichteter Stahlschrott an. Zur Wiederverwendung des meist hochwertig legierten Stahlschrotts in der Stahl und Eisen erzeugenden Industrie ist es erforderlich, die Zinkbeschichtung unter Berücksichtigung ökonomischer und ökologischer Gesichtspunkte zu entfernen.

Aus der Druckschrift US 4 501 073 A ist ein Verfahren zum Dehydratisieren von Metallstücken bekannt. Hierbei werden die Metallstücke in Körbe geladen und anschließend in siedendes Öl eingetaucht, um das an den Metallstücken haftende Wasser durch Abkochen verdampfen zu lassen.

In der US 5 106 467 A ist ein Verfahren zum kontinuierlichen Entzinken von Stahlschrott beschrieben. Hierbei wird der Stahlschrott in eine Vielzahl von Körben aufgegeben, die durch eine Vielzahl von in Reihe geschalteten Entzinkungsbecken gefahren werden.

Aus der DE 698 06 160 T2 ist ein galvanisches Verfahren zur Entfernung von Zink aus Stahlabfällen bekannt. Hierzu wird der mit Zink beschichtete Stahlschrott in einen wässrigen Elektrolyten getaucht, der Natrium- oder Kaliumhydroxid enthält, wobei das Zink durch galvanische Korrosion von der Oberfläche des Stahlschrottes entfernt wird.

Die WO 2012/110239 A1 offenbart ein Verfahren zum Ablösen der Zinkbeschichtung von Schrott. Hierzu wird der Schrott mit einer Flüssigkeit in einer Förderrinne eines Schwingförderers in Kontakt gebracht.

Des Weiteren schlägt die EP 0 479 326 B1 ein Verfahren zur Entzinkung unter Verwendung von alkalischem Lösungsmittel vor. Hierzu wird der Stahlschrott in Körben verstaut und über ein lineares Schienenfördersystem sequentiell in hintereinander angeordneten Tauchbecken vom ersten Tauchbecken zum letzten Tauschbecken in einer aufeinanderfolgenden Bewegung verfahren.

Des Weiteren ist ein genaues Einstellen der Verweilzeit der Chargen in der Lösung häufig nicht möglich. Es hat sich gezeigt, dass es bei den oben beschriebenen Verfahren immer wieder zu ungewollten Verzögerungen gekommen ist, da die Entzinkung in einem linear angelegten Verfahren häufig ungenügend durchzuführen ist.

Es ist daher eine Aufgabe der vorliegenden Erfindung, ein Verfahren zur Entzinkung von Stahlschrott zu schaffen, mit der die oben genannten Nachteile überwunden werden können.

Diese Aufgabe wird durch das im Anspruch 1 angegebene Verfahren gelöst, insbesondere durch ein Beizkarussell, an dem strahlenförmig eine Vielzahl von Armen angeordnet sind, wobei an den Armen jeweils mindestens ein Transportkorb angelenkt ist, und das Beizkarussell eine Hub-, Senk- und Drehbewegung ausführt, so dass die an den Armen angelenkten Transportkörbe in hierzu vorgesehene kreisförmig um das Beizkarussell herum angeordnete Behandlungsbecken angehoben, abgesenkt und wieder angehoben und so weiter gedreht werden, dass jeder Transportkorb mindestens einmal in jede der in den Behandlungsbecken vorgehaltenen Flüssigkeiten getaucht wird und mindestens ein weiteres zweites Beizkarussell, das entgegen der Drehrichtung des ersten Beizkarussells drehbar angeordnet und so zu dem ersten Beizkarussell positioniert wird, dass das Beschicken und/oder Entnehmen der mit dem zweiten Beizkarussell verbundenen Transportkörbe mit denen des ersten Beizkarussells synchronisiert ist, so dass das Beladen des Beizkarussells mit den Transportkörben, die mit den verzinkten Metallschrottstücken chargiert sind, und das Entnehmen der Transportkörbe, die mit den entzinkten Metallschrottstücken chargiert sind, aus dem Beizkarussell, an einem gemeinsamen Aufnahme- und Endladeort durchgeführt wird, wobei jeder Transportkorb im Beizkarussell individuell gehoben und/oder gesenkt wird, um hierdurch kürzere oder längere Behandlungszeiten der Metallschrottstücke zu gewährleisten.

Jeder Transportkorb im Beizkarussell wird individuell gehoben und/oder gesenkt, um hierdurch kürzere Behandlungszeiten der Metallschrottstücke zu gewährleisten.

Die Drehung der Transportkörbe erfolgt in einem definierten Zeitintervall, sobald sich alle Transportkörbe in einer angehobenen Position befinden.

Die Transportkörbe werden nach dem Anheben zum Abtropfen der Flüssigkeiten über den Behandlungsbecken gehalten.

Um das Abtropfen der Flüssigkeiten von dem in den Transportkörben chargierten Metallschrott zu beschleunigen, ist eine mit den Transportkörben wirkverbundene Schüttelvorrichtung vorgesehen.

Um den Durchsatz an zu behandelndem Metallschrott weiter zu erhöhen, ist mindestens ein weiteres zweites Beizkarussell vorgesehen, das entgegen der Drehrichtung des ersten Beizkarussells drehbar angeordnet sein. Das zweite Beizkarussell ist derart zu dem ersten Beizkarussell positioniert, dass das Beschicken und/oder Entnehmen der mit dem zweiten Beizkarussell verbundenen Transportkörbe mit denen des ersten Beizkarussells synchronisiert ist, so dass das Beladen des Beizkarussells mit den Transportkörben, die mit den verzinkten Metallschrottstücken chargiert sind, und das Entnehmen der Transportkörbe, die mit den entzinkten Metallschrottstücken chargiert sind, aus dem Beizkarussell an einem gemeinsamen Aufnahme- und Endladeort durchgeführt werden kann.

Dabei erfolgt der Materialfluss in das Beizkarussell und aus dem Beizkarussell in Intervallen und in einer Arbeitsrichtung.

Eine weitere Aufgabe der vorliegenden Erfindung ist es, eine Vorrichtung zur Durchführung des erfindungsgemäßen Verfahrens zur Verfügung zu stellen, die eine kompakte Bauweise aufweist und mit der ein hoher Durchsatz von zu entzinkenden Metallschrottstücken möglich ist.

Diese Aufgabe wird durch die im Anspruch 8 angegebenen Merkmale gelöst, insbesondere durch mindestens ein erstes Beizkarussell um das die Behandlungsbecken kreisförmig angeordnet sind und die Transportkörbe an Armen angelenkt sind, die wiederum mit dem zentral angeordneten Beizkarussell verbunden sind, und das Beizkarussell so ausgelegt ist, dass hiermit eine Hub-, Senk- oder Drehbewegung ausführbar ist, so dass die an den Armen angelenkten Transportkörbe in die Behandlungsbecken absenkbar, anhebbar oder drehbar sind, so dass jeder der Transportkörbe mindestens einmal in jede der in den Behandlungsbecken vorgehaltenen unterschiedlichen Flüssigkeiten eintauchbar ist und mindestens ein weiteres zweites Beizkarussell vorgesehen ist, das entgegen der Drehrichtung des ersten Beizkarussells drehbar ist und so zu diesem positioniert ist, dass das Beschicken und/oder Entnehmen der mit dem zweiten Beizkarussell verbundenen Transportkörbe und das Beschicken und/oder Entnehmen der mit dem ersten Beizkarussell verbundenen Transportkörbe, synchronisierbar ist, so dass das Beschicken und/oder Entnehmen der Transportkörbe aus beiden Beizkarussellen an einem gemeinsamen, hierfür vorgesehenen, Aufnahme- und Entladungsort erfolgt.

Die Metallstücke werden zum Beizen in Chargen nach definiertem Gewicht in Transportkörbe eingebracht und jeweils an einem Arm eines Beizkarussells befestigt.

Durch Hub-, Senkbewegung der Arme und die Drehbewegung des Beizkarussells, werden nun die an den Armen befestigten Transportkörbe in die zur Verfügung stehenden Behandlungsbecken getaucht und für eine definierte Zeit dort behandelt. Jeder Transportkorb kann individuell gehoben und gesenkt werden, um so kürzere Behandlungszeiten zu gewährleisten. Die Drehung wird in einem definierten Zeitintervall ausgeführt, wenn sich alle Transportkörbe in der gehobenen Position befinden. Nach dem Aufheben aus dem Bad kann der Transportbehälter zum Abtropfen für eine definierte Zeit über dem Behälter gehalten werden und durch eine Schüttelvorrichtung kann das Abtropfverhalten beschleunigt werden. Die Schüttelvorrichtung kann zentral für alle Körbe oder individuell für jeden Korb angebracht sein.

Die Behandlungsschritte können sein: Beizen, elektrolytische Behandlung, Spülen, Entfetten, Behandlung mit Lösemitteln, Trocknen, etc. Eine Absaugung kann aufgrund einer Wasserstoffentstehung notwendig sein, dazu können einzelne Behandlungsbecken oder die Gesamtanlage eingehaust werden, um einen sicheren Betrieb zu gewährleisten.

Das Beizmedium ist eine saure, wässrige Lösung, bevorzugt Schwefelsäure mit einer Konzentration (gesamt) von 10-50 % oder Salzsäure (gesamt) mit einer Konzentration von 5 - 18 % oder eine alkalische Lösung. Jedes Behandlungsbecken kann mit einem Zirkulationsbehälter und einer entsprechenden Umwälzung sowie mit analytischer Messung und Zugabe von frischer Beizlösung und Entnahme von gebrauchter Beizlösung hinsichtlich Zusammensetzung konstant gehalten werden. Die Temperatur der Behandlungsmedien wird durch Wärmeeintrag oder Kühlung stabilisiert, bevorzugterweise zwischen 40 und 70°C.

Verfahren und Vorrichtung zeichnen sich durch folgende Vorteile aus:
- Eine kompakte Bauweise;
- ein genaues Einstellen der Verweilzeit ist möglich;
- Aufgabe- und Entnahmeposition ist räumlich zusammen;
- der Transportkorb ist bei dem ganzen Behandlungsvorgang mit dem Beizkarusselll verbunden, was die Wahrscheinlichkeit für Fehler bei der Manipulation minimiert.

Im Speziellen geht es um Metallstücke, die als Schrott vorliegen, und bei der Beschichtung handelt es sich um Zink. In diesem Fall besteht die Behandlung aus Beladen, beheiztes Entfettungsbad, Spülen 1, Beizen 1, Beizen 2, Spülen 3, Entladung. Die Ausführung mit acht Positionen (inkl. Be- und Entladeposition stellt eine übliche Ausführung dar.

Die Erfindung wird im Folgenden anhand einer beispielhaften Ausführungsform unter Bezugnahme auf die beigefügten Figuren erläutert. Die Figuren zeigen:
- **Fig. 1**: die schematische Draufsicht auf die Vorrichtung mit zwei gegenüber angeordneten Beizkarussellen, sowie angrenzend angeordneten Versorgungseinrichtungen;
- **Fig. 2**: einen Schnitt durch die Vorrichtung gemäß der Schnittlinie A-A in Fig. 1 in einer Seitenansicht.

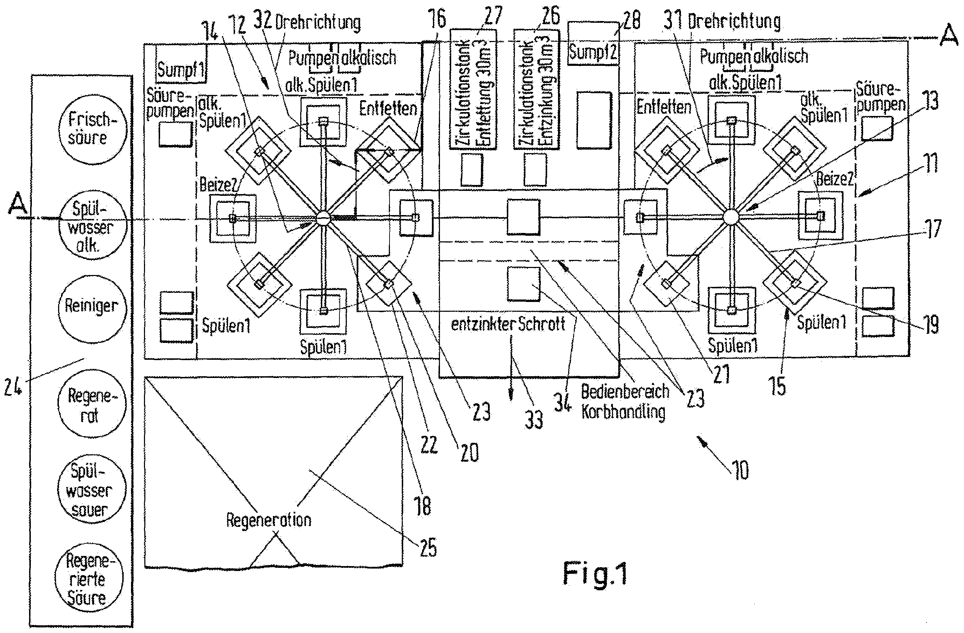

Wie in der Fig.1 dargestellt, besteht die Vorrichtung 10 bevorzugt aus zwei Beizkarussellen 11 und 12, die gegenüberliegend zueinander angeordnet sind. Zum vereinfachten Verständnis der Vorrichtung 10 und der Übersichtlichkeit werden im nachfolgenden gleiche Bauteile jeweils nur einmal mit den ihnen zugeordneten Bezugszeichen versehen.

Das Beizkarussell 11, 12 besteht im Wesentlichen aus einem zentralen Teil 13, 14, um das kreisförmig herum eine Vielzahl von Behandlungsbecken 15, 16 angeordnet sind. Dem Beizkarussell sind ferner eine Vielzahl von Armen 17, 18 zugeordnet, die mit dem zentralen Teil 13, 14 verbunden sind und die sich von diesem strahlenförmig in Richtung der kreisförmig um den zentralen Teil 13, 14 des Beizkarussells 11, 12 herum angeordneten Behandlungsbecken 15, 16 erstrecken.

An den Armen 17, 18 sind freie Enden 19, 20 vorgesehen, die mit Transportkörben 20, 21 in Wirkverbindung bringbar sind. Der Kreisumfang des Beizkarussells 11, 12 wird durch die Länge der Arme 17, 18 ausgehend vom zentralen Teil 13, 14 bestimmt, was wiederum die Positionen der Behandlungsbecken 15, 16 um das Beizkarussell herum bestimmt, und die so gewählt sind, dass die Transportkörbe 21, 22 im Wesentlichen mittg in die Behandlungsbecken 15, 16 eingetaucht werden können.

Wie die Fig. 1 weiter zeigt, ist zwischen den Beizkarussellen ein Bedienbereich 23 vorgesehen. Der Bedienbereich 23 ist so organisiert, dass hier der zu entzinkende Schrott bereits in die Transportkörbe 21, 22 chargiert angeliefert und an den Armen des Beizkarussells 11, 12 eingehängt und nach der Entzinkung im Wesentlichen zeitgleich von den Armen 17, 18 abgenommen werden kann.

Wie durch die Pfeile 31, 32 dargestellt, ist die Drehrichtung der Beizkarusselle 11, 12 jeweils in entgegengesetzter Richtung ausgebildet. Dadurch kann ein möglichst hoher Volumenstrom an jeweils entsprechend zu bearbeitendem oder zu entnehmendem Metallschrott auf engsten Raum im Bedienbereich 23 sichergestellt werden. Der Materialfluss an entzinktem Metallschrott ist durch den Pfeil 33 und den Transportkorb 34 angedeutet. Der Transportkorb 35 steht stellvertretend für die Körbe, die in das Beizkarussell 11, 12 im Bedienbereich 23 an die Arme 17, 18 anhängbar sind.

An der Peripherie der Vorrichtung 10 ist eine Tankfarm 24, in der Frischsäure, alkalische Spülwasser, Reiniger, Regenerat, saures Spülwasser und regenerierte Säure vorgehalten werden sollen, vorgesehen. Die frischen und/oder aufbereiteten Reagenzien können über Rohrleitungen (nicht dargestellt) in die Behandlungsbecken gepumpt werden, sowie verbrauchte Reagenzien abgepumpt und in einer Regeneration 25 aufbereitet oder neutralisiert werden.

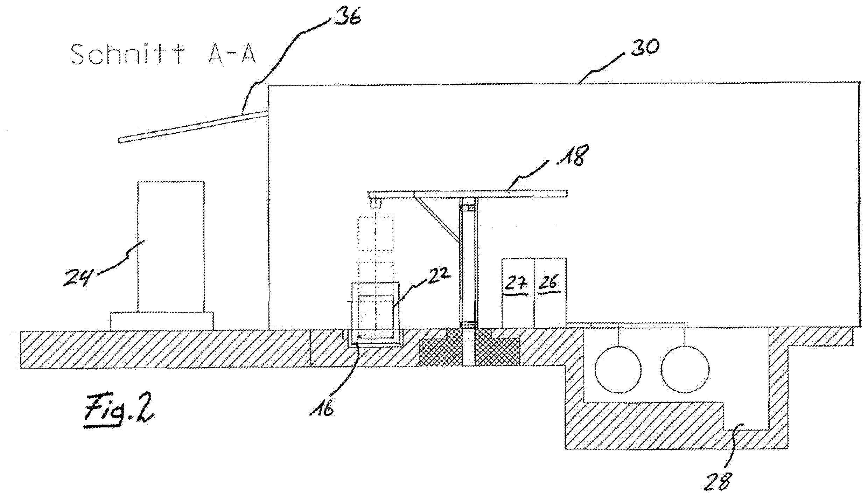

Um Volumenschwankungen in den Behandlungsbecken 15, 16 schnell ausgleichen zu können, sind zwischen dem Beizkarussell 11 und 12 mindestens jeweils ein Zirkulationstank 27 mit Entfettungsreagenzien und ein Zirkulationstank 26 mit Entzinkungsreagenzien vorgesehen, wie dies auch in Fig. 2 dargestellt ist.

Die bei dem durch das Behandeln der Metallschrottstücke nicht durch die Behandlungsbecken aufgefangenen Flüssigkeiten werden in Pumpensümpfen 28, 29 gesammelt und zur weiteren Veranlassung gesammelt.

Die Fig. 2 zeigt die erfindungsgemäße Vorrichtung 10 in einer Ausführungsform mit einer Einhausung 30, die das Absaugen und das weitere Behandeln von bei der Entzinkung möglicherweise entstehenden Wasserstoffgases über eine Absaugvorrichtung 36 erlaubt. Hierdurch kann die Betriebssicherheit der Vorrichtung 10 sichergestellt werden. Das Anheben oder Absenken der Transportkörbe 21, 22 aus bzw. in die Behandlungsbecken 15, 16 ist durch gestrichelt dargestellte Positionen der Transportkörbe beispielhaft dargestellt.

### Bezugszeichenliste

- 10: Vorrichtung
- 11: erstes Beizkarussell
- 12: zweites Beizkarussell
- 13: zentraler Teil
- 14: zentraler Teil
- 15: Behandlungsbecken
- 16: Behandlungsbecken
- 17: Arme
- 18: Arme
- 19: freies Ende
- 20: freies Ende
- 21: Transportkorb
- 22: Transportkorb
- 23: Bedienbereich
- 24: Tankfarm
- 25: Regeneration
- 26: Zirkulationstank Entzinkung
- 27: Zirkulationstank Entfettung
- 28: Pumpensumpf
- 29: Pumpensumpf
- 30: Einhausung
- 31: Pfeil Drehrichtung Beizkarussell im Uhrzeigersinn
- 32: Pfeil Drehrichtung Beizkarussell entgegen Uhrzeigersinn
- 33: Pfeil Materialfluss entzinkter Metallschrott
- 34: Transportkorb entzinkter Metallschrott
- 35: Transportkorb verzinkter Metallschrott
- 36: Absaugvorrichtung

## Patentansprüche

1. Verfahren zum Beizen von beschichteten Metallschrottstücken, wobei die Metallschrottstücke in hierfür vorgesehene Transportkörbe aufgegeben werden und die Transportkörbe mit den Metallschrottstücken mit in einer Vielzahl von in Behandlungsbecken gefüllter Entfettungs-, Spül- und Beizflüssigkeit in Kontakt gebracht werden, **gekennzeichnet durch** ein Beizkarussell, an dem strahlenförmig eine Vielzahl von Armen angeordnet sind, wobei an den Armen jeweils mindestens ein Transportkorb angelenkt ist, und das Beizkarussell eine Hub-, Senk- und Drehbewegung ausführt, so dass die an den Armen angelenkten Transportkörbe in hierzu vorgesehene kreisförmig um das Beizkarussell herum angeordnete Behandlungsbecken angehoben, abgesenkt und wieder angehoben und so weiter gedreht werden, dass jeder Transportkorb mindestens einmal in jede der in den Behandlungsbecken vorgehaltenen Flüssigkeiten getaucht wird und mindestens ein weiteres zweites Beizkarussell, das entgegen der Drehrichtung des ersten Beizkarussells drehbar angeordnet und so zu dem ersten Beizkarussell positioniert wird, dass das Beschicken und/oder Entnehmen der mit dem zweiten Beizkarussell verbundenen Transportkörbe mit denen des ersten Beizkarussells synchronisiert ist, so dass das Beladen des Beizkarussells mit den Transportkörben, die mit den verzinkten Metallschrottstücken chargiert sind, und das Entnehmen der Transportkörbe, die mit den entzinkten Metallschrottstücken chargiert sind, aus dem Beizkarussell, an einem gemeinsamen Aufnahme- und Endladeort durchgeführt wird, wobei jeder Transportkorb im Beizkarussell individuell gehoben und/oder gesenkt wird, um hierdurch kürzere oder längere Behandlungszeiten der Metallschrottstücke zu gewährleisten.

2. Verfahren nach Anspruch 1, **dadurch gekennzeichnet, dass** die Drehung der Transportkörbe in einem definierten Zeitintervall erfolgt, sobald sich alle Transportkörbe in einer angehobenen Position befinden.

3. Verfahren nach Anspruch 2, **dadurch gekennzeichnet, dass** die Transportkörbe nach dem Anheben zum Abtropfen der Flüssigkeiten über den Behandlungsbecken gehalten werden.

4. Verfahren nach einem der Ansprüche 1 bis 3, **dadurch gekennzeichnet, dass** das Abtropfen der Flüssigkeit von dem in den Transportkörben chargierten Metallschrott über eine mit dem Transportkörben wirkverbundene Schüttelvorrichtung beschleunigt wird.

5. Verfahren nach Anspruch 4, **dadurch gekennzeichnet, dass** die Schüttelvorrichtung zentral am zentralen Teil des Beizkarussells angeordnet wird.

6. Verfahren nach Anspruch 5, **dadurch gekennzeichnet, dass** die Schüttelvorrichtung individuell für jeden der Transportkörbe im Bereich der Arme angeordnet wird.

7. Vorrichtung zum Durchführen des Verfahren zum Beizen von mit Zink beschichteten Metallschrottstücken gemäß der Ansprüche 1 bis 6 umfassend eine Vielzahl von Transportkörben (21, 22), in die Metallschrottstücke chargierbar sind und die Transportkörbe (21, 22) mit den Metallschrottstücken anschließend in eine Vielzahl von Behandlungsbecken (15, 16) eintauchbar sind, die jeweils entweder mit einer Entfettungs-, Spül- oder Beizflüssigkeit gefüllt sind, und die Metallschrottstücke mit den Flüssigkeiten in Kontakt bringbar sind, **gekennzeichnet durch** mindestens ein erstes Beizkarussell (11, 12) um das die Behandlungsbecken (15, 16) kreisförmig angeordnet sind und die Transportkörbe (21, 22) an Armen (17, 18) angelenkt sind, die wiederum mit dem zentral angeordneten Beizkarussell (11, 12) verbunden sind, und das Beizkarussell (11, 12) so ausgelegt ist, dass hiermit eine Hub-, Senk- oder Drehbewegung ausführbar ist, sodass die an den Armen angelenkten Transportkörbe (21, 22) in die Behandlungsbecken (15, 16) absenkbar, anhebbar oder drehbar sind, so dass jeder der Transportkörbe (21, 22) mindestens einmal in jede der in den Behandlungsbecken (15, 16) vorgehaltenen unterschiedlichen Flüssigkeiten eintauchbar ist und mindestens ein weiteres zweites Beizkarussell (12) vorgesehen ist, das entgegen der Drehrichtung (31, 32) des ersten Beizkarussells (11) drehbar ist und so zu diesem positioniert ist, dass das Beschicken und/oder Entnehmen der mit dem zweiten Beizkarussell (12) verbundenen Transportkörbe (22) und das Beschicken und/oder Entnehmen der mit dem ersten Beizkarussell (11) verbundenen Transportkörbe (21), synchronisierbar ist, so dass das Beschicken und/oder Entnehmen der Transportkörbe (21, 22) aus beiden Beizkarussellen an einem gemeinsamen, hierfür vorgesehenen, Aufnahme- und Endladungsort (23) erfolgt.

## Claims

1. Method for pickling coated pieces of metal scrap, wherein the pieces of metal scrap are delivered in transport baskets provided for that purpose and the transport baskets with the pieces of metal scrap are brought into contact with degreasing liquid, rinsing liquid and pickling liquid filled into a plurality of treatment basins, **characterised by** a pickling carousel at which a plurality of arms is arranged in radiating form, wherein at least one transport basket is pivotably connected with each of the arms and the picking carousel executes a lifting, lowering and rotating movement so that the transport baskets pivotably connected with arms are lifted, lowered and lifted again in treatment basins, which are provided for that purpose and arranged circularly around the pickling carousel, and further rotated so that each transport basket is dipped at least once into each of the liquids present in the treatment basins, and at least one further, second pickling carousel which is arranged to be rotatable oppositely to the rotational direction of the first pickling carousel and so positioned with respect to the first pickling carousel that the loading and/or removal of the transport baskets connected with the second pickling carousel is or are synchronised with that or those of the first pickling carousel, so that the loading of the pickling carousel with the transport baskets, which are charged with the galvanised pieces of metal scrap, and the removal of the transport baskets, which are charged with the degalvanised pieces of metal scrap, from the pickling carousel, are carried out at a common receiving location and final loading location, wherein each transport basket is individually raised and/or lowered in the pickling carousel so as to thereby ensure shorter or longer treatment times of the pieces of metal scrap.

2. Method according to claim 1, **characterised in that** the rotation of the transport baskets is carried out at a defined interval in time as soon as all transport baskets are disposed in a raised position.

3. Method according to claim 2, **characterised in that** the transport baskets after lifting are held above the treatment basins for the liquids to drip off.

4. Method according to any one of claims 1 to 3, **characterised in that** dripping of the liquid off the metal scrap charged in the transport baskets is assisted by way of a shaking device operatively connected with the transport baskets.

5. Method according to claim 4, **characterised in that** the shaking device is arranged centrally at the central part of the pickling carousel.

6. Method according to claim 5, **characterised in that** the shaking device is arranged individually for each of the transport baskets in the region of the arms.

7. Device for performing the method for pickling pieces of metal scrap, which are coated with zinc, according to any one of claims 1 to 6, comprising a plurality of transport baskets (21, 22), into which pieces of metal scrap can be charged, and the transport baskets (21, 22) with the pieces of metal scrap are subsequently able to be dipped into a plurality of treatment basins (15, 16), which are respectively filled with a degreasing liquid, a rinsing liquid and a pickling liquid, and the pieces of metal scrap can be brought into contact with the liquids, **characterised by** at least one first pickling carousel (11, 12) about which the treatment basins (15, 16) are circularly arranged and the transport baskets (21, 22) are pivotably connected with arms (17, 18), which in turn are connected with the centrally arranged pickling carousel (11, 12), and the pickling carousel (11, 12) is so designed that a lifting, lowering or rotational movement can be executed by it so that the transport baskets (21, 22) pivotably connected with the arms can be lowered into the treatment basins (15, 16), raised or rotated so that each of the transport baskets (21, 22) can be dipped at least once into each of the different liquids present in the treatment basins (15, 16), and at least one further, second pickling carousel (12) is provided, which is rotatable oppositely to the rotational direction (31, 32) of the first pickling carousel (11) and is so positioned relative thereto that the loading and/or removal of the transport baskets (22) connected with the second pickling carousel (12) and the loading and/or removal of the transport baskets (21) connected with the first pickling carousel (11) can be synchronised so that the loading and/or removal of the transport baskets (21, 22) from the two pickling carousels takes or take place at a common receiving location and final loading location (23) provided for that purpose.

## Revendications

1. Procédé pour le décapage de morceaux de résidus métalliques enduits ; dans lequel les morceaux de résidus métalliques sont disposés dans des paniers de transport prévus à cet effet et les paniers de transport avec les morceaux de résidus métalliques sont amenés en contact avec une multitude de liquides de dégraissage, de rinçage et de décapage qui remplissent des cuves de traitement, **caractérisé par** un carrousel de décapage contre lequel sont disposés en forme de rayons une multitude de bras ; dans lequel respectivement au moins un panier de transport est articulé aux bras et le carrousel de décapage effectue un mouvement de levage, d'abaissement et de rotation, d'une manière telle que les paniers de transport articulés aux bras sont soulevés, abaissés et à nouveau soulevés et ainsi de suite mis en rotation dans des cuves de traitement prévues à cet effet, disposées en formant un cercle autour du carrousel de décapage ; en ce que chaque panier de transport est plongé au moins une fois dans chacun des liquides mis en réserve dans les cuves de traitement et au moins un deuxième carrousel de décapage suivant qui est disposé en rotation à l'encontre de la direction de rotation du premier carrousel de décapage et qui est positionné par rapport au premier carrousel de décapage d'une manière telle que le garnissage et/ou le prélèvement des paniers de transport reliés au deuxième carrousel de décapage sont synchronisés avec ceux du premier carrousel de décapage, tant et si bien que le chargement du carrousel de décapage avec les paniers de transport qui ont été chargés avec les morceaux de résidus métalliques zingués et le prélèvement des paniers de transport, qui ont été chargés avec les morceaux de résidus métalliques dézingués, à partir du carrousel de décapage, sont mis en oeuvre à un endroit de réception et de déchargement commun ; dans lequel chaque panier de transport est soulevé et/ou abaissé de manière individuelle dans le carrousel de décapage pour garantir de cette manière des temps de traitement pour les morceaux de résidus métalliques plus courts ou plus longs.

2. Procédé selon la revendication 1, **caractérisé en ce que** la rotation des paniers de transport a lieu dans un intervalle de temps défini dès que tous les paniers de transport se trouvent dans une position dans laquelle ils ont été soulevés.

3. Procédé selon la revendication 2, **caractérisé en ce que** les paniers de transport, après leur soulèvement, sont maintenues au-dessus des cuves de traitement à des fins d'écoulement goutte-à-goutte des liquides.

4. Procédé selon l'une quelconque des revendications 1 à 3, **caractérisé en ce que** l'écoulement du liquide à partir des résidus métalliques chargés dans les paniers de transport est accéléré via un dispositif de secouage relié de manière opérationnelle aux paniers de transport.

5. Procédé selon la revendication 4, **caractérisé en ce que** le dispositif de secouage est disposé en position centrale sur la partie centrale du carrousel de décalage.

6. Procédé selon la revendication 5, **caractérisé en ce que** le dispositif de secouage est disposé de manière individuelle pour chacun des paniers de transport dans la zone des bras.

7. Dispositif pour la mise en oeuvre du procédé destiné au décapage de morceaux de résidus métalliques enduits de zinc selon l'une quelconque des revendications 1 à 6, comprenant une multitude de paniers de transport (21, 22) qui peuvent être chargés avec les morceaux de résidus métalliques et les paniers de transport (21, 22) avec les morceaux de résidus métalliques peuvent ensuite être plongés dans une multitude de cuves de traitement (15, 16), qui sont remplies respectivement soit avec un liquide de dégraissage, soit avec un liquide de rinçage, soit avec un liquide de décapage, et les morceaux de résidus métalliques peuvent être amenés en contact avec les liquides, **caractérisé par** au moins un premier carrousel de décapage (11, 12) et par le fait que les cuves de traitement (15, 16) sont disposées en formant un cercle et les paniers de transport (21, 22) sont articulés à des bras (17, 18) qui, à leur tour, sont reliés au carrousel décapage (11, 12) disposé en position centrale, et le carrousel de décapage (11, 12) est conçu d'une manière telle que l'on peut effectuer avec lui un mouvement, d'abaissement ou de rotation, d'une manière telle que les paniers de transport (21, 22) qui sont articulés aux bras peuvent être abaissés, peuvent être soulevés ou peuvent être mis en rotation dans les cuves de traitement (15, 16), tant et si bien que chaque panier de transport (21, 22) peut être plongé au moins une fois dans chacun des différents liquides mis en réserve dans les cuves de transport (15, 16) et au moins un deuxième carrousel de décapage (12) est prévu, qui peut être mis en rotation à l'encontre de la direction de rotation (31, 32) du premier carrousel de décapage (11) et qui est positionné par rapport à ce dernier d'une manière telle que le garnissage et/ou le prélèvement des paniers de transport (22) reliés au deuxième carrousel de décapage (12) et le garnissage et/ou le prélèvement des paniers de transport (21) reliés au premier carrousel de décapage (11) peuvent être synchronisés, tant et si bien que le garnissage et/ou le prélèvement des paniers de transport (21, 22) ou à partir des deux carrousels de décapage ont lieu à un endroit de réception et de déchargement commun (23) prévu à cet effet.
